# EUROPÄISCHE PATENTSCHRIFT

(11) **EP 2 616 325 B1**
(45) Veröffentlichungstag und Bekanntmachung des Hinweises auf die Patenterteilung: **05.08.2015**
(21) Anmeldenummer: 11757282.6
(22) Anmeldetag: 13.09.2011
(51) Int. Cl.: B63H 9/02

(54) **MAGNUS-ROTOR**
MAGNUS ROTOR
ROTOR À EFFET MAGNUS

(30) Priorität: 16.09.2010 DE 102010040901
(43) Veröffentlichungstag der Anmeldung: 24.07.2013
(73) Patentinhaber: Wobben Properties GmbH, 26605 Aurich (DE)
(72) Erfinder: ROHDEN, Rolf, Aurich 26607 (DE)
(74) Vertreter: Eisenführ Speiser
(86) Internationale Anmeldenummer: PCT/EP2011/065802
(87) Internationale Veröffentlichungsnummer: WO 2012/034987

(56) Entgegenhaltungen:
- DE-B4-102006 025 732

## Beschreibung

Die Erfindung betrifft einen Magnus-Rotor.

Magnus-Rotoren werden auch als Flettner-Rotoren oder Segel-Rotoren bezeichnet.

Magnus-Rotoren sind im Stand der Technik bekannt. Insbesondere als Schiffsantriebe sind sie auch unter dem Begriff Flettner-Rotor bekannt geworden und in dem Buch "Die Segelmaschine" von Klaus D. Wagner, Ernst Kabel Verlag GmbH, Hamburg, 1991, ist die Ausrüstung von Schiffen mit einem solchen Flettner-Rotor oder Magnus-Rotor beschrieben.

Dabei ist den bekannten Magnus-Rotoren gemeinsam, dass diese auf Schiffen eingesetzt werden, um durch ihre Rotation und die Einwirkung einer möglichst quer zum Schiff angreifenden Windkraft eine Vortriebskraft zu erzeugen. Dabei wird stets der Betrieb der Magnus-Rotoren betrachtet und die Vortriebskraft, die die Magnus-Rotoren in diesem Betrieb leisten können.

Als allgemeiner Stand der Technik wird auf die folgenden Dokumente verwiesen: "Flettner spins again. In: Ship & Boat International, July/August 1985, S. 41, 42", "WAGNER, Claus D.: Die Segelmaschine. Hamburg. Ernst Kabel Verlag GmbH, 1991, S. 85, 156-159. - ISBN 3-8225-0158-1", DE 10 2006 025 732 B4, US 1 632 322 A, DE 10 2005 028 447 B4 und DE 10 2007 003 779 A1.

DE 10 2006 025 734 B4 wird als nächstliegender Stand der Technik angesehen.

Der Erfindung liegt die Aufgabe zugrunde, die Wirtschaftlichkeit eines Schiffes, insbesondere eines Frachtschiffes, mit einem Magnus-Rotor zu verbessern.

Erfindungsgemäß wird diese Aufgabe durch einen Magnus-Rotor mit den Merkmalen nach Anspruch 1, einem Schiff, insbesondere Frachtschiff, mit den Merkmalen nach Anspruch 12 sowie ein Verfahren mit den Merkmalen nach Anspruch 13 gelöst. Vorteilhafte Weiterbildungen sind in den Unteransprüchen beschrieben.

Somit wird ein Magnus-Rotor mit einem Träger, welcher im Inneren des Magnus-Rotors angeordnet ist, einem Rotor, welcher im Betrieb des Magnus-Rotors um den Träger rotiert, einer Platte, die den Rotor horizontal abschließt, und einem Lager, welches den Rotor auf dem Träger trägt, vorgesehen. Dabei weist der Rotor wenigstens eine Öffnung in der Platte auf. Ferner weist der Träger wenigstens einen Befestigungspunkt zum Anheben des Magnus-Rotors mittels wenigstens eines Befestigungsmittels und einer Hebevorrichtung auf.

Hierdurch wird es ermöglicht, eine Hebevorrichtung wie einen Kran oder dergleichen an dem Magnus-Rotor zu befestigen, um hiermit den Magnus-Rotor abzuheben und gegen einen weiteren Magnus-Rotor auszutauschen. Auf diese Weise wird die Zeit, die das Schiff für die Wartung oder Instandsetzung nicht eingesetzt werden kann, minimiert, da das Schiff mit einem zweiten Magnus-Rotor seinen Betrieb fortsetzen kann, während der erste ausgetauschte Magnus-Rotor an Land gewartet oder instand gesetzt wird.

Dabei ist es vorteilhaft, dass der Magnus-Rotor vertikal durch die erfindungsgemäßen Öffnungen und Befestigungspunkte angehoben werden kann, da hierdurch die äußere Hülle des Rotors des Magnus-Rotors nicht durch Arbeiten oder insbesondere Zug- und Druckkräfte angegriffen und hierdurch möglicherweise verändert oder beschädigt wird, da diese äußere Hülle aufgrund ihrer aerodynamischen Eigenschaften entscheidend für den Vortrieb ist, der durch den Magnus-Rotor erzeugt wird.

Ferner ist es vorteilhaft, die Befestigungspunkte am Träger des Magnus-Rotors vorzusehen, da der empfindliche Rotor des Magnus-Rotors, d.h. die äußere Hülle des Magnus-Rotors, hierdurch nicht beeinträchtigt und bei Anheben des Magnus-Rotors auch nicht mit Zugkräften beaufschlagt wird, die die Form der äußeren Hülle verziehen und damit ihre aerodynamischen Eigenschaften beeinträchtigen könnten.

Gemäß einem Aspekt der Erfindung weist der Rotor wenigstens zwei Öffnungen in der Platte und der Träger wenigstens zwei Befestigungspunkte auf. Hierdurch kann die angreifende Last beim Anheben des Magnus-Rotors auf zwei Angriffspunkte verteilt werden.

Gemäß einem weiteren Aspekt der Erfindung weist der Rotor in dem Bereich, mit dem er mit der Lagerung verbunden ist, wenigstens eine Öffnung bzw. wenigstens zwei Öffnungen auf. Hierdurch kann die Verbindung zwischen Lagerung und Rotor des Magnus-Rotors als durchgehende Fläche ausgestaltet werden, um Luftverwirbelungen im Inneren des Magnus-Rotors zu vermeiden. Durch das erfindungsgemäße Vorsehen entsprechender Öffnungen in dieser Verbindung kann ein Zugang zu den Befestigungspunkten des Trägers durch die Öffnungen der horizontalen Platte des Rotors des Magnus-Rotors geschaffen werden, um die Befestigungsmittel durch diese Öffnungen hindurch führen zu können.

Gemäß einem Aspekt der Erfindung können die eine Öffnung bzw. die zwei Öffnungen der Platte und der eine Befestigungspunkt bzw. die zwei Befestigungspunkte des Trägers im Wesentlichen vertikal zueinander angeordnet werden. Hierdurch wird erreicht, dass der Rotor des Magnus-Rotors so gedreht positioniert werden kann, dass eine oberhalb und außerhalb des Magnus-Rotors angeordnete Hebevorrichtung wie ein Kran vertikal Zugang zu den Befestigungspunkten des Trägers erhalten kann.

Gemäß einem weiteren Aspekt der Erfindung sind die eine Öffnung der Platte, die eine Öffnung des Rotors und der eine Befestigungspunkt des Trägers bzw. jede der zwei Öffnungen der Platte, jede der zwei Öffnungen des Rotors und jeder der zwei Befestigungspunkte des Trägers im Wesentlichen im gleichen Abstand von der vertikalen Drehachse des Magnus-Rotors angeordnet. Hierdurch wird die Lastverteilung beim Anheben des Magnus-Rotors gleichmäßig verteilt, um ein Verkippen beim Anheben zu vermeiden.

Gemäß einem Aspekt der Erfindung sind die zwei Öffnungen der Platte, die zwei Öffnungen des Rotors und die zwei Befestigungspunkte des Trägers jeweils in einem horizontalen Abstand von im Wesentlichen 180° zueinander um die vertikale Drehachse des Magnus-Rotors angeordnet. Dies ist vorteilhaft, da hierdurch beim Anheben des Magnus-Rotors eine gleichmäßige Lastverteilung auf die Befestigungspunkte um die Mittelachse des Magnus-Rotors, auf der sich bei einer im Wesentlichen rotationssymmetrischen Konstruktion des Magnus-Rotors auch dessen Gewichtsschwerpunkt befindet, erreicht wird, um hierdurch ein Verkippen beim Anheben zu vermeiden.

Gemäß einem Aspekt der Erfindung weist der Träger eine Arretierungsvorrichtung auf, um eine Relativbewegung zwischen dem Träger und dem Rotor zu verhindern. Dies ist zum einen erforderlich, um die Sicherheit von Personen, die zum Anbringen der Befestigungsmittel das Innere des Rotors betreten müssen, zu gewährleisten. Ferner ist auch beim Anheben des Magnus-Rotors eine Drehung von Rotor gegenüber dem Träger unbedingt zu vermeiden, um ein Abscheren der Befestigungsmittel durch eine Drehung zu verhindern.

Gemäß einem weiteren Aspekt der Erfindung ist die Arretierungsvorrichtung eine Bremsvorrichtung, die auf einen Antrieb des Rotors wirken kann. Hierdurch kann durch die Bremse direkt auf den Antrieb gewirkt werden, der im Betrieb des Magnus-Rotors die Drehung des Rotors gegenüber dem Träger hervorruft. So kann auf den Antrieb bremsend eingewirkt werden, wodurch die Bremse platzsparend direkt an der Quelle der Drehbewegung vorgesehen werden kann. Ferner sind Bremsen für Antriebe, insbesondere Antriebsachsen, bekannt und kostengünstig verfügbar.

Gemäß einem Aspekt der Erfindung ist die Arretierungsvorrichtung eine Sicherungsvorrichtung mit einem Arretierungsmittel, welches in eine Öffnung in dem Rotor radial eingreifen kann. Hierdurch wird eine einfache und zuverlässige Arretierung geschaffen, da durch das Eingreifen des Arretierungsmittels in radialer Richtung in eine Öffnung des Rotors mit einfachen Mitteln eine sichere Arretierung geschaffen werden kann. Ferner ist diese Art der Arretierung vorteilhaft, da das in die Öffnung eingreifende Arretierungsmittel von Außen sichtbar ist und so von Außen durch eine einfache Sichtkontrolle festgestellt werden kann, ob der Rotor gegen eine Relativbewegung gegenüber dem Träger gesichert ist oder nicht.

Gemäß einem weiteren Aspekt der Erfindung weist der Träger einen Antrieb zum Antreiben des Rotors, einen Wechselrichter zum Speisen des Antriebs mit elektrischer Energie und einer Steuerung zum Steuern des Antriebs und bzw. oder des Wechselrichters auf. Auf diese Weise werden wesentliche Komponenten des Magnus-Rotors an dem Träger, z.B. in seinem Inneren, vorgesehen. Hierdurch stellt der Magnus-Rotor ein Modul dar, welches als geschlossenes System, d.h. als unabhängiges Komplettsystem, ausgetauscht werden kann, ohne wesentlich verändert zu werden. Somit wird der Magnus-Rotor als Ganzes ausgetauscht, da die einzelnen Komponenten eines Magnus-Rotors aufeinander abgestimmt sind, sowohl die mechanischen als auch die elektrischen Komponenten. Durch diesen Komplettaustausch wird das System Magnus-Rotor nicht verändert, sondern kann als Ganzes ausgetauscht und gewartet oder instand gesetzt, d.h. repariert, werden.

Gemäß einem weiteren Aspekt der Erfindung ist an jedem der wenigstens einen Befestigungspunkte ein Befestigungsmittel vorgesehen, welches durch jede der wenigstens einen vertikal zueinander ausgerichteten Öffnung der Platte und Öffnung des Rotors von jedem der wenigstens einen Befestigungspunkte des Trägers durch die Platte geführt wird, wobei der Magnus-Rotor mittels des Befestigungsmittels angehoben werden kann. Auf diese Weise wird das Anheben des Magnus-Rotors umgesetzt.

Ausführungsbeispiele und Vorteile der Erfindung werden nachstehend unter Bezugnahme auf folgende Figuren näher erläutert:

| | |
|---|---|
| Fig. 1 | zeigt eine schematische perspektivische Darstellung eines Magnus-Rotors; |
| Fig. 2 | zeigt eine vereinfachte schematische Seitenansicht des Magnus-Rotors; |
| Fig. 3 | zeigt eine detaillierte schematische Seitenansicht des Magnus-Rotors; |
| Fig. 4 | zeigt eine vereinfachte schematische Seitenansicht des oberen Teils des Magnus-Rotors; |
| Fig. 5 | zeigt eine detaillierte schematische Ansicht des Magnus-Rotors von oben; |
| Fig. 6 | zeigt eine detaillierte schematische Ansicht des Inneren des Magnus-Rotors von oben; und |
| Fig. 7 | zeigt eine weitere vereinfachte schematische Seitenansicht des oberen Teils des Magnus-Rotors. |

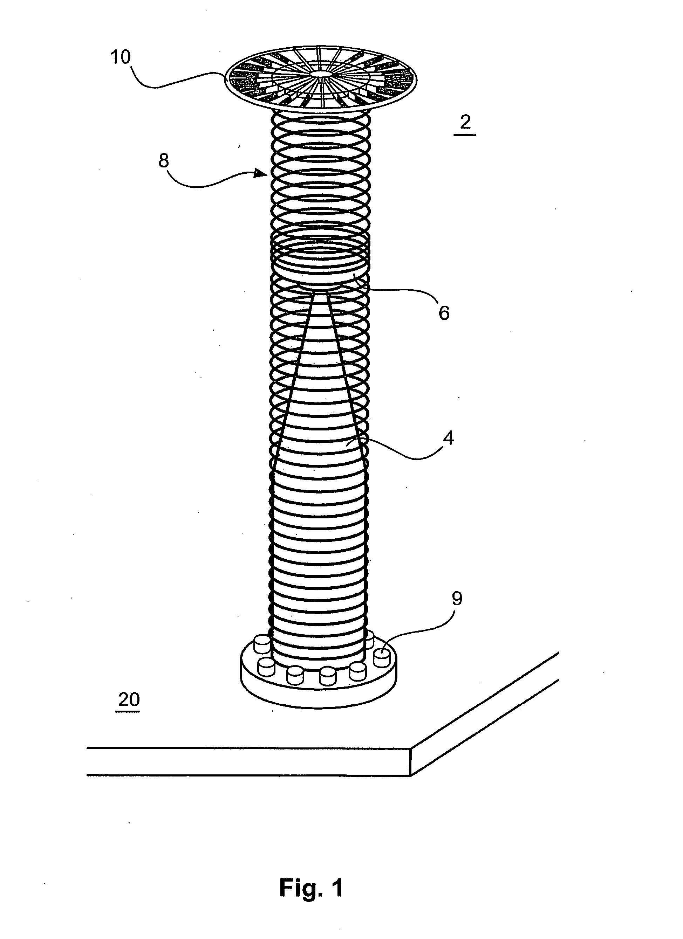

Fig. 1 zeigt eine schematische perspektivische Darstellung eines Magnus-Rotors 2. Der Magnus-Rotor 2 weist einen oberen rotierenden Teil als Rotor 8 und einen unteren stehenden Teil als Träger 4 auf, die über eine Lagerung 6 miteinander verbunden sind. Der Rotor 8 ist vorzugsweise zylindrisch ausgebildet. An dem oberen Ende des Rotors 8 ist eine Endplatte 10 an diesen angebracht. Der Träger 4 des Magnus-Rotors 2 ist über Bolzen oder Schrauben 9 auf einer Grundplatte 20 befestigt. Soweit der Magnus-Rotor 2 z.B. auf dem Deck eines Schiffes oder Ähnlichem angebracht ist, ist eine entsprechende Grundplatte 20 zur Befestigung des Trägers 4 nicht erforderlich, da diese von dem Schiffsdeck oder Ähnlichem selbst gebildet wird. Dabei ist der Träger 4 im Inneren des Magnus-Rotors 2 angeordnet. Auf diesem Träger 4 rotiert der Rotor 8 unter Vermittlung durch eine Lagerung 6. Diese Lagerung 6 kann ein bekanntes Wälzlager oder jede andere geeignete Ausführung eines Lagers sein.

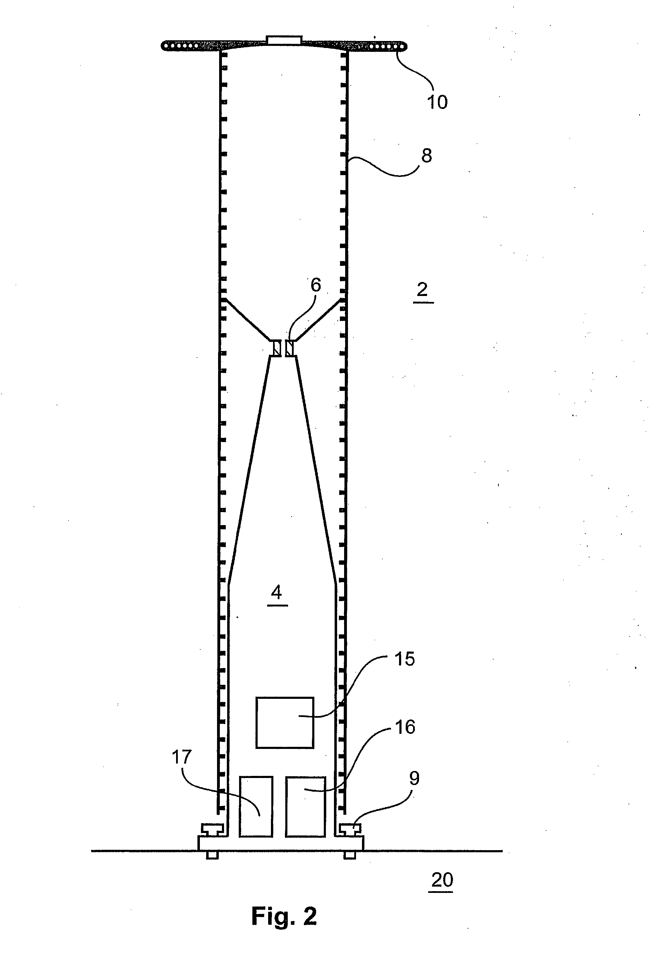

Fig. 2 zeigt eine vereinfachte schematische Seitenansicht des Magnus-Rotors 2. Im Inneren des Trägers 4 sind ein Motor 15 zum Antreiben, d.h. zum Rotieren, des Rotor 8, sowie eine Steuerung 16 zum Steuern des Motors 15 und ein Wechselrichter 17 zum Speisen des Motors 15 vorgesehen. Diese sind im Inneren des Trägers 4 vorgesehen. Der Magnus-Rotor 2 ist mittels Bolzen oder Schrauben 9 auf der Grundplatte 20 oder einem Schiffsdeck oder dergleichen montiert und weist den innenliegenden Träger 4, die Lagerung 6, den Rotor 8 sowie die Endplatte 10 auf, wie in Fig. 1 gezeigt und beschrieben.

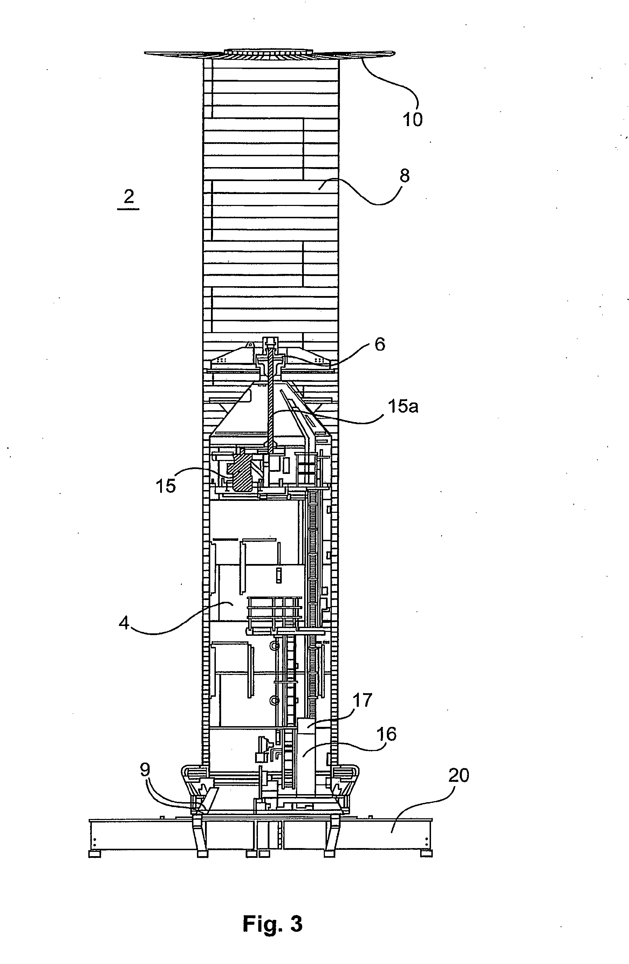

Fig. 3 zeigt eine detaillierte schematische Seitenansicht des Magnus-Rotors 2. Dabei sind die Elemente der Fig. 1 und 2 mit den gleichen Bezugszeichen gezeigt und beschrieben. Hierbei ist der Motor 15 des Rotors 8 im oberen Bereich des stehenden Trägers 4 angeordnet, sodass eine Welle 15a des Motors 15 durch das Lager 6 hindurchgeführt wird.

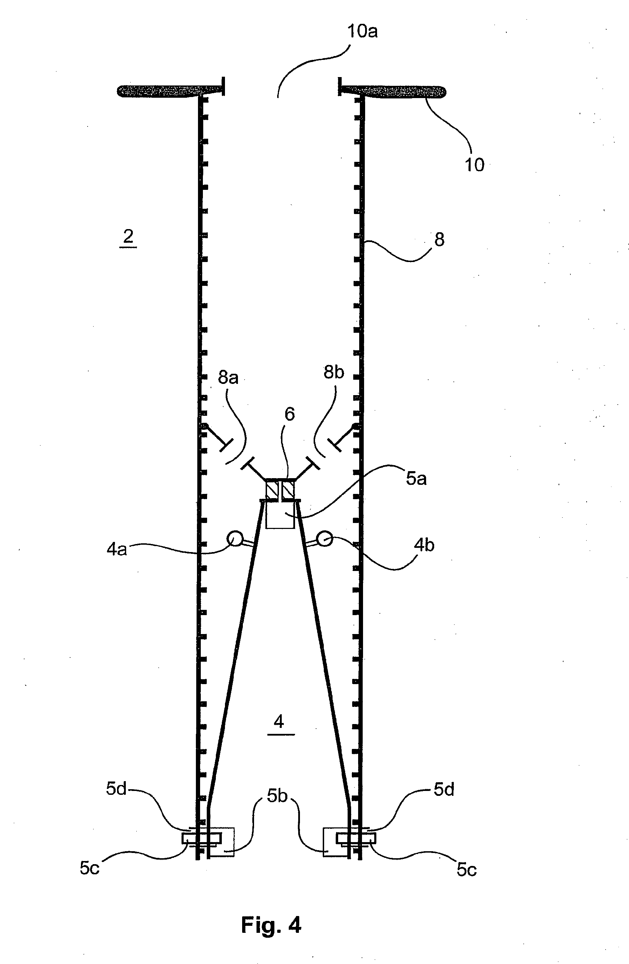

Fig. 4 zeigt eine vereinfachte schematische Seitenansicht des oberen Teils des Magnus-Rotors 2. In dieser vereinfachten schematischen Seitenansicht wird der Magnus-Rotor 2 ohne Grundplatte 20 und dergleichen sowie Bolzen oder Schrauben 9 gezeigt. Ferner ist eine Bremse 5a bzw. eine Sicherung 5b gezeigt, die beide als alternative Möglichkeiten oder auch gemeinsam dazu vorgesehen sind, eine Relativbewegung zwischen stehendem Träger 4 und rotierendem Rotor 8 sicher zu verhindern. Dabei kann die Bremse 5a auf den Motor 15 wirken. Die Sicherung 5b weist ein Sicherungselement 5c auf, welches ein Bolzen 5c oder dergleichen sein kann, welches durch eine Öffnung 5d des Rotors 8 radial hindurch geführt wird.

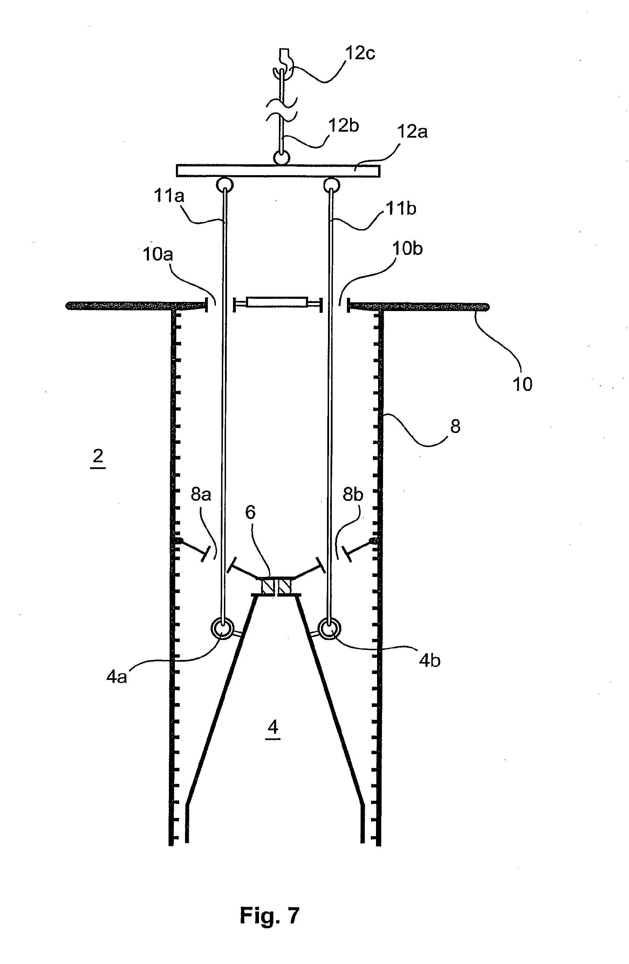

Erfindungsgemäß ist hierbei in der Endplatte 10 eine Öffnung 10a vorgesehen, die den Innenraum des Rotors 8 oberhalb der Lagerung 6 mit der Umgebung des Magnus-Rotors 2 verbinden. Diese Öffnung 10a ist verschließbar ausgestaltet, um i.Allg. geschlossen zu sein, insbesondere im Betrieb des Magnus-Rotors 2. Die Öffnung 10a wird also nur in einem stehenden Zustand des Rotors 8, in dem der Rotor 8 durch die Bremse 5a oder die Sicherung 5b gesichert ist, geöffnet und sind ansonsten derart verschlossen, z.B. festgeschraubt, dass ein ungewolltes Öffnen der Öffnung 10a, insbesondere durch Fliehkräfte, die während des Betriebes des Magnus-Rotors 2 auftreten, sicher vermieden wird. Alternativ können auch zwei Öffnungen 10a und 10b, wie nachfolgend in Fig. 7 dargestellt, vorgesehen werden.

Erfindungsgemäß sind ferner in dem Teil des Rotors 8, der dessen Außenwand mit der Lagerung 6 verbindet, zwei Öffnungen 8a und 8b vorgesehen. Auch diese können, ebenso wie die Öffnung 10a der Endplatte 10, geöffnet werden. Dies ist ebenfalls nur in einem stehenden, gesicherten Zustand des Rotors 8 vorgesehen und auch diese Öffnungen 8a und 8b sind gegen ein ungewolltes Öffnen durch Fliehkräfte und andere Umstände gesichert.

Ferner weist der innenliegende Träger 4 zwei Befestigungspunkte 4a und 4b auf, die an der Außenwand des innenliegenden Trägers 4 vorgesehen sind. Dabei können diese Befestigungspunkte 4a und 4b Stifte, Ösen, Augen, Haken oder dergleichen sein, um an diesen oder durch diese hindurch Befestigungsmittel wie z.B. ein Seil als solches oder ein Seil mit einem Haken, einem Schäkel, einer Schlaufe oder dergleichen zu befestigen.

Die Öffnungen 8a und 8b sowie die Befestigungspunkte 4a und 4b sind alle ungefähr im gleichen Abstand, d.h. in dem im Wesentlichen gleichen Radius zur Mittelachse, d.h. zur Drehachse, des Magnus-Rotors 2 angeordnet. Die Öffnung 10a ist radial um diese Mittelachse ausgebildet. Ferner liegen die Öffnungen 8a und 8b, die Öffnung 10a sowie die Befestigungspunkte 4a und 4b jeweils ungefähr in der gleichen horizontalen Ebene, d.h. sie besitzen jeweils paarweise den im Wesentlichen gleichen vertikalen Abstand zur Endplatte 10, zur Lagerung 6 oder auch zur Grundplatte 20. In dieser horizontalen Ebene sind die Öffnungen 8a und 8b bzw. die Befestigungspunkte 4a und 4b jeweils ungefähr 180° zueinander versetzt angeordnet, d.h. sie liegen sich jeweils paarweise ungefähr bzgl. der Mittelachse, d.h. Drehachse, des Magnus-Rotors 2 direkt gegenüber. Die Öffnung 10a ist derart ausgebildet, dass ihr Radius um die Mittelachse ungefähr dem größten Abstand des äußeren Randes der Öffnungen 8a und 8b entspricht bzw. so groß gewählt ist, dass der Radius der Öffnung 10a um die Mittelachse größer ist als der Abstand der Befestigungspunkte 4a und 4b von der Mittelachse in radialer Richtung.

Dabei sind die beiden Öffnungen 8a und 8b direkt unterhalb der Öffnung 10a angeordnet. Ein Versatz der Öffnungen 8a und 8b gegenüber der Öffnung 10a ist nicht möglich, da die Öffnungen 8a und 8b sowie 10a an Bauteilen des Rotors 8 vorgesehen sind, die starr miteinander verbunden sind, d.h. sich nicht gegeneinander verschieben oder versetzen können. Hingegen sind die Befestigungspunkte 4a und 4b an dem innenliegenden Träger 4 als feststehenden Teil des Magnus-Rotors 2 vorgesehen und die Öffnungen 8a und 8b sowie 10a am Rotor 8 als rotierendem Teil des Magnus-Rotors 2. Daher ist der Rotor 8 gegenüber dem stehenden Träger 4 in eine bestimmte Position zu bringen, um zu erreichen, dass sich die Befestigungspunkte 4a und 4b in vertikaler Richtung direkt unterhalb der Öffnungen 8a und 8b sowie Öffnung 10a des Rotor 8 befinden.

Werden statt einer Öffnung 10a nach Fig. 4 zwei Öffnungen 10a und 10b nach Fig. 7 vorgesehen, so sind diese so vorzusehen, dass sie in Bezug auf die Öffnungen 8a und 8b sowie die Befestigungselemente 4a und 4b entsprechende Positionen und Orientierungen sowie Abmaße einnehmen.

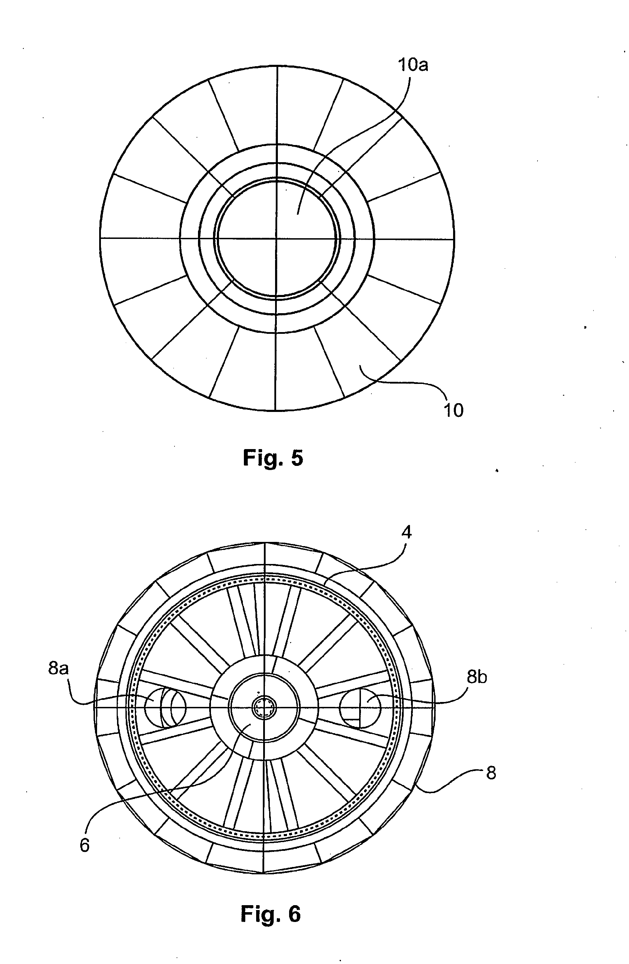

Fig. 5 zeigt eine detaillierte schematische Ansicht des Magnus-Rotors 2 von oben. Dabei sind in dieser Ansicht die Endplatte 10 sowie deren Öffnung 10a dargestellt, wobei die Öffnung 10a in dieser Darstellung geschlossen ist.

Fig. 6 zeigt eine detaillierte schematische Ansicht des Inneren des Magnus-Rotors 2 von oben. Hierbei ist die Lagerung 6 um die Mittelachse, d.h. um die Rotationsachse, des Magnus-Rotors 2 angeordnet. Um diese Mittelachse radial herum und unterhalb der Lagerung 6 ist der stehende Träger 4 angeordnet. Über diesen und um diesen radial herum ist der Rotor 8 vorgesehen, der mittels der Lagerung 6 mit dem Träger 4 verbunden ist und den Rotor 8 trägt. In dem Teil des Rotors 8, der die äußere Hülle des Rotors 8 mit dem Lager 6 verbindet, sind die beiden Öffnungen 8a und 8b vorgesehen.

Fig. 7 zeigt eine weitere vereinfachte schematische Seitenansicht des oberen Teils des Magnus-Rotors 2. In dieser Ansicht sind anstelle der einen Öffnung 10a nach Fig. 4 zwei Öffnungen 10a und 10b vorgesehen. Es sind als Befestigungsmittel zwei Seile 11a und 11 b gezeigt, die an den Befestigungspunkten 4a und 4b des innenliegenden Trägers 4 befestigt sind. Die Öffnungen 8a und 8b sowie 10a und 10b sind geöffnet. Die Seile 11a und 11b werden von den Befestigungspunkten 4a und 4b durch die Öffnungen 8a und 8b sowie weiter durch die Öffnungen 10a und 10b in die Außenumgebung des Magnus-Rotors 2 geführt und sind dort z.B. über eine Traverse 12a mittels eines Seils 12b an dem Haken 12c eines Krans befestigt. Dabei sind die Seile 11a und 11 b zwischen den Befestigungspunkten 4a und 4b des Trägers 4 und der Traverse 12a des Krans gespannt, d.h. sie werden von einer Kraft entgegen der Schwerkraftrichtung vertikal straff gezogen.

In diesem Zustand der Fig. 7 kann der Magnus-Rotor 2 durch die Seile 11a und 11 b z.B. von einem Kran 12a, 12b, 12c einer Hafenanlage, an der das mit Magnus-Rotoren 2 ausgestattete Schiff angelegt hat, oder auch einem schiffseigenen Kran 12a, 12b, 12c angehoben werden. Hierzu ist es erforderlich, die Bolzen oder Schrauben 9 des stehenden Teils, d.h. des innenliegenden Trägers 4, von der Grundplatte 20 bzw. dem Schiffsdeck zu lösen. Dabei darf ein Lösen dieser Bolzen und Schrauben 9 erst dann geschehen, wenn der Magnus-Rotor 2 durch die gespannten Seile 11 a und 11 b sicher gegen ein Umkippen gesichert ist.

Ferner sind weitere Verbindungen zwischen dem innenliegenden Träger 4 und der Grundplatte 20 oder dem Schiff zu trennen, bevor der Magnus-Rotor 2 als Ganzes angehoben werden kann. So sind Verbindungen zur Zufuhr und bzw. oder Abfuhr von elektrischem Strom, Öl, Hydraulikmittel, Wasser, Druckluft oder dergleichen zum Motor 15, zur Steuerung 16 und zum Wechselrichter 17 zu trennen, bevor der Magnus-Rotor 2 mittels eines Krans 12a, 12b, 12c von der Grundplatte 20 oder dem Schiffsdeck abgehoben werden kann.

Um also einen Austausch eines Magnus-Rotors 2, z.B. zur Wartung oder Reparatur an Land, gegen einen anderen Magnus-Rotor 2 durchzuführen oder zumindest einen Magnus-Rotor 2 zu o.g. Zwecken zu entfernen, ist folgendermaßen vorzugehen:
In einem ersten Schritt ist zunächst der rotierende Magnus-Rotor 2 auszuschalten, d.h. in den Stillstand zu versetzen. Dabei ist darauf zu achten, dass die Position des Stillstands so gewählt wird, dass sich die Befestigungspunkte 4a und 4b des innenliegenden Trägers 4 in dieser Position in vertikaler Richtung direkt unterhalb der Öffnungen 8a und 8b sowie 10a und 10b des Rotors 8 befinden. Ferner ist, z.B. durch eine Bremse 5a oder eine Sicherung 5b oder dergleichen sicherzustellen, dass diese Stillstandsposition gehalten wird und sich der Rotor 8 nicht mehr gegenüber dem stehenden Träger 4 bewegen kann.

Dies kann durch eine Bremse 5a geschehen, die z.B. an dem stehenden Träger 4 angeordnet ist und auf den Motor 15, insbesondere dessen Welle 15a, des Rotors 8 wirken kann, um diesen festzusetzen. Auch kann dies durch eine Sicherung 5b oder mehrere Sicherungen 5b geschehen, die z.B. so in dem stehenden Träger 4 vorgesehen ist, dass diese z.B. mittels eines Sicherungselements 5c, der von der Sicherung 5b von dem stehenden Träger 4 aus durch eine Öffnung 5d des Rotors 8 radial hindurch geführt werden kann, diesen sichert. Dabei sind die Form und die Abmaße des Sicherungselements 5c, z.B. der Durchmesser eines Bolzens 5c, der Form und den Abmaßen der Öffnung 5d im Rotor 8 so anzupassen, dass eine Relativbewegung zwischen stehendem Träger 4 und rotierendem Rotor 8 sicher ausgeschlossen werden kann. Dies ist einerseits wichtig, weil beim Anheben des Magnus-Rotors 8 große Kräfte auf die Seile 11a und 11 b wirken und sich diese Kräfte bei einem ungewollten Verdrehen von rotierendem Rotor 8 und stehendem Träger 4 auf die Bauteile des Magnus-Rotors 2 übertragen und diese beschädigen, insbesondere deformieren können. Auch können durch eine Drehung die Seile 11 a und 11 b abgeschert werden und der angehobene Magnus-Rotor 2 herunterfallen. Ferner ist es bei der Befestigung der Seile 11 a und 11 b im Inneren des Magnus-Rotors 2 erforderlich, dass Personen sich im Inneren aufhalten und bewegen, insbesondere in Bereichen zwischen dem rotierenden Rotor 8 und dem stehenden Träger 4, weshalb aus Sicherheitsgründen eine Relativbewegung zwischen dem Rotor 8 und dem Träger 4 sicher ausgeschlossen sein muss.

In einem zweiten Schritt werden die Öffnungen 8a und 8b sowie 10a und 10b geöffnet und die Bauteile, mit denen die Öffnungen 8a und 8b sowie 10a und 10b verschlossen werden, wie z.B. Deckel oder Klappen gegen ein ungewolltes Verschließen, d.h. Zufallen, gesichert. Diese Sicherung ist erforderlich, um die Sicherheit des Personals bei den Arbeiten im Inneren des Magnus-Rotors 2 zu gewährleisten. Ferner könnte durch ein ungewolltes Verschließen bzw. Zurückfallen oder Zurückgleiten der Deckel oder Klappen ein Seil 11 a oder 11 b beschädigt werden und im gespannten Zustand abreißen, wodurch die gesamte Last des angehobenen Magnus-Rotors 2 auf dem verbleibenden Seil 11a oder 11 b lasten würde. Durch diese Überlastung oder auch den Impuls des Abreißens des ersten Seils 11 a oder 11 b könnte auch das zweite verbleibende Seil 11 a oder 11 b reißen und hierdurch der Magnus-Rotor 2 herunterfallen, hierdurch selbst schwer beschädigt oder sogar zerstört werden und auch die Grundplatte 20 oder das Schiff oder den Untergrund der Hafenanlage oder dergleichen beschädigen oder zerstören. Auch kann der Kran 12a, 12b, 12c durch den Impuls des Abreißens beschädigt oder zerstört werden. Ferner könnten hierdurch auch Personen zu Schaden kommen. Ebenso kann in dem Fall, dass bei einem Abreißen eines ersten Seils 11 a oder 11b das zweite Seil 11 a oder 11b nicht reißt und die gesamte Last trägt, durch das Abreißen des ersten Seils 11a oder 11 b eine seitliche Schwingung des angehobenen Magnus-Rotors 2 ausgelöst werden, wodurch der angehobene seitlich ausschlagende Magnus-Rotor 2 ebenfalls Grundplatte 20, Schiff, Hafenanlagen, den anhebenden Kran 12a, 12b, 12c oder dergleichen beschädigen oder zerstören oder Personal in der Umgebung verletzen kann.

In einem dritten Schritt wird durch einen Kran 12a, 12b, 12c eine Hebevorrichtung 12a, 12b, 12c mit zwei Seilen 11a und 11 b durch die Öffnungen 8a und 8b sowie 10a und 10b zu den Befestigungspunkten 4a und 4b heruntergelassen und dort sicher befestigt. Für den Fall des ungewollten Lösens oder Abreißens der Seile 11 a und 11 b von den Befestigungspunkten 4a und 4b kann die oben beschriebene Gefährdung der Umgebung des angehobenen Magnus-Rotors 2 auftreten wie zuvor beschrieben, weshalb eine sichere Befestigung der Seile 11a und 11b an den Befestigungspunkten 4a und 4b sicherzustellen ist.

In einem vierten Schritt sind die Seile 11a und 11b anzuziehen, d.h. zu spannen. Hierzu ist zunächst sicherzustellen, dass sich kein Personal mehr im Inneren des anzuhebenden Magnus-Rotors 2 oder auf diesem drauf befindet. Ferner sind die Seile 11a und 11b nur soweit anzuziehen, dass sie nicht durchhängen und im Falle des Lösens der Bolzen oder Schrauben 9 das Gewicht des Magnus-Rotors 2 sicher aufnehmen können, ohne dass dieser umkippen kann. Dabei ist insbesondere darauf zu achten, dass die Seile 11a und 11 b soweit angezogen werden, dass durch ein Kippen des gelösten Magnus-Rotors 2 kein Impuls auf die Seile 11 a und 11 b gegeben wird, da gerade dies zu einem Reißen der Seile 11 a und 11 b führen kann.

In einem fünften Schritt werden nun die Bolzen oder Schrauben 9 zwischen dem Träger 4 und der Grundplatte 20 oder dem Schiff oder dergleichen gelöst und entfernt. Ferner werden alle sonstigen Verbindungen, z.B. zur Zufuhr oder Abfuhr von Medien und Energie, gelöst und entfernt, die von Außen dem Magnus-Rotor 2 zugeführt werden, wie z.B. die Energieversorgung des Motors 15, der Steuerung 16 oder des Wechselrichters 17. Ist dies geschehen, steht der Magnus-Rotor 2 aufgrund seines Eigengewichts auf der Grundplatte 20 oder dem Schiffsdeck und wird gegen ein seitliches Verkippen oder Verrutschen durch die Seile 11a und 11 b sicher gehalten.

In einem sechsten Schritt kann der Magnus-Rotor 2 durch einen Kran 12a, 12b, 12c mittels der Seile 11 a und 11 b angehoben und versetzt, d.h. von der Grundplatte 20 oder dem Schiffsdeck entfernt werden. Dabei kann der Magnus-Rotor 2 dann auf einer anderen Grundplatte oder dergleichen abgesetzt und dort mittels Bolzen oder Schrauben 9 gesichert werden. Der Magnus-Rotor 2 wird dabei erfindungsgemäß als ganzes System entfernt, d.h. mit samt des Motors 15, der Steuerung 16 und des Wechselrichters 17, die im Inneren des Trägers 4 vorgesehen sind. Dies bedeutet, dass ein Entfernen eines Magnus-Rotors 2 erfindungsgemäß ohne eine Veränderung des Systems Magnus-Rotors 2 durchgeführt werden kann, d.h. ohne die einzelnen Komponenten wie z.B. Rotor 8, innenliegender Träger 4, Motor 15, Steuerung 16 und Wechselrichter 17 voneinander zu trennen. Dies ist vorteilhaft, da diese aufeinander abgestimmt sind und diese Abstimmung durch den Austausch des Magnus-Rotors 2 als Ganzes beigehalten werden kann, d.h. nicht verändert wird.

Um einen Austausch zweier Magnus-Rotoren 2 gegeneinander durchzuführen, ist nun ein zweiter Magnus-Rotor 2 an die Stelle des entfernten ersten Magnus-Rotors 2 zu befördern. Dies geschieht durch die Umkehrung der o.g. Schritte für diesen zweiten Magnus-Rotor 2.

Der entfernte erste Magnus-Rotor 2 kann nun, z.B. an Land in einer geeigneten Wartungs- und Reparatureinrichtung, gewartet, instand gesetzt oder erneuert werden. Dabei ist es vorteilhaft, diese Maßnahmen erstens nicht auf einem schwankenden Schiff im montierten Zustand des Magnus-Rotors 2 und zweitens in einer dafür eingerichteten Einrichtung durchzuführen. So kann die Bewegung des Schiffes, auch im Hafen, die Arbeiten an dem Magnus-Rotor 2 erschweren und verzögern. Ferner müsste hierzu das Personal, deren Werkzeug und die Materialien und insbesondere Ersatzteile in den betreffenden Hafen geschafft werden, in dem sich das Schiff befindet. Auch sind bei einem montierten, d.h. betriebsfähigen Magnus-Rotor 2 nicht alle Bereiche und Bauteile zugänglich. Ferner würde dann das Innere der Lagerung 6 der Witterung ausgesetzt werden, was einer Reparatur oder Wartung der Lagerung 6 nicht zuträglich wäre. Schließlich können auch Ersatzteile erforderlich sein, die sich nur mit einem unverhältnismäßigen Aufwand transportieren lassen.

Daher ist es vorteilhaft, den Magnus-Rotor 2 als Ganzes entfernen zu können. So kann das Schiff umgehend mit einem zweiten Magnus-Rotor 2 ausgerüstet werden und wieder in See stechen, während der erste ausgetauschte Magnus-Rotor 2 im Hafen in der Wartungs- und Reparatureinrichtung verbleibt. So kann eine wartungs- oder reparaturbedingte Liegezeit des Schiffes vermieden und hierdurch seine Wirtschaftlichkeit verbessert werden. Ferner kann der erste ausgetauschte Magnus-Rotor 2 in einer entsprechenden Wartungs- und Reparatureinrichtung einfacher, besser, schneller und günstiger gewartet oder instand gesetzt werden als bei einer Durchführung dieser Maßnahmen im montierten Zustand auf einem Schiff. Auch ist es hierbei vorteilhaft, den gesamten Magnus-Rotor 2 als System, d.h. mit den im Inneren des Trägers 4 vorgesehenen Komponenten Motor 15, Steuerung 16 und Wechselrichter 17, zu entfernen bzw. auszutauschen, da sowohl die mechanischen als auch elektrischen Komponenten jedes Magnus-Rotors 2 aufeinander abstimmt sind und ein Austausch einzelner Komponenten, soweit dieser aufgrund ihrer Anordnung, insbesondere im Inneren des Trägers 4, überhaupt möglich wäre, diese Abstimmung aufheben und eine teilweise sehr aufwendige Neuabstimmung nach dem Austausch erforderlich machen würde.

Der Gedanke der Erfindung betrifft den Austausch eines Magnus-Rotors oder auch Flettner-Rotors. Der Austausch erfolgt über Seile, die durch den obersten Deckel, der hierzu entfernt worden ist, des Magnus-Rotors auf den inneren Träger zugreifen. Damit kann der gesamte Magnus-Rotor vom Schiff angehoben werden und durch einen, neuen ausgetauscht werden. Dazu müssen vorher die entsprechenden Befestigungsschrauben am Fuß des Magnus-Rotors und auch alle elektrischen Verbindungen gelöst werden, so dass der gesamte Magnus-Rotor zusammen mit Wechselrichter, Steuerschränken etc. abgehoben wird.

## Patentansprüche

1. Magnus-Rotor (2), mit
einem Träger (4), welcher im Inneren des Magnus-Rotors (2) angeordnet ist,
einem Rotor (8), welcher im Betrieb des Magnus-Rotors (2) um den Träger (4) rotiert,
einer Platte (10), die den Rotor (8) horizontal abschließt, und einem Lager (6), welches den Rotor (8) auf dem Träger (4) trägt, **dadurch gekennzeichnet, dass** der Rotor (8) wenigstens eine Öffnung (10a, 10b) in der Platte (10) aufweist, und dass
der Träger (4) wenigstens einen Befestigungspunkt (4a, 4b) zum Anheben des Magnus-Rotors (2) mittels wenigstens eines Befestigungsmittels (11a, 11b) und einer Hebevorrichtung (12a, 12b, 12c) aufweist.

2. Magnus-Rotor (2) nach Anspruch 1,
wobei der Rotor (8) wenigstens zwei Öffnungen (10a, 10b) in der Platte (10) aufweist, und
wobei der Träger (4) wenigstens zwei Befestigungspunkte (4a, 4b) aufweist.

3. Magnus-Rotor (2) nach Anspruch 1 oder 2,
wobei der Rotor (8) in dem Bereich, mit dem er mit der Lagerung (6) verbunden ist, wenigstens eine Öffnung (8a, 8b) bzw. wenigstens zwei Öffnungen (8a, 8b) aufweist.

4. Magnus-Rotor (2) nach einem der vorherigen Ansprüche,
wobei die eine Öffnung (10a, 10b) bzw. die zwei Öffnungen (10a, 10b) der Platte (10) und der eine Befestigungspunkt (4a, 4b) bzw. die zwei Befestigungspunkte (4a, 4b) des Trägers (4) im Wesentlichen vertikal zueinander angeordnet werden können.

5. Magnus-Rotor (2) nach einem der vorherigen Ansprüche,
wobei die eine Öffnung (10a, 10b) der Platte (10), die eine Öffnung (8a, 8b) des Rotors (8) und der eine Befestigungspunkt (4a, 4b) des Trägers (4) bzw. jede der zwei Öffnungen (10a, 10b) der Platte (10), jede der zwei Öffnungen (8a, 8b) des Rotors (8) und jeder der zwei Befestigungspunkte (4a, 4b) des Trägers (4) im Wesentlichen im gleichen Abstand von der vertikalen Drehachse des Magnus-Rotors (2) angeordnet sind.

6. Magnus-Rotor (2) nach einem der vorherigen Ansprüche,
wobei die zwei Öffnungen (10a, 10b) der Platte (10), die zwei Öffnungen (8a, 8b) des Rotors (8) und die zwei Befestigungspunkte (4a, 4b) des Trägers (4) jeweils in einem horizontalen Abstand von im Wesentlichen 180° zueinander um die vertikale Drehachse des Magnus-Rotors (2) angeordnet sind.

7. Magnus-Rotor (2) nach einem der vorherigen Ansprüche,
wobei der Träger (4) eine Arretierungsvorrichtung (5a, 5b) aufweist, um eine Relativbewegung zwischen dem Träger (4) und dem Rotor (8) zu verhindern.

8. Magnus-Rotor (2) nach Anspruch 7,
wobei die Arretierungsvorrichtung (5a, 5b) eine Bremsvorrichtung (5a) ist, die auf einen Antrieb (15) des Rotors (8) wirken kann.

9. Magnus-Rotor (2) nach Anspruch 7,
wobei die Arretierungsvorrichtung (5a, 5b) eine Sicherungsvorrichtung (5b) ist mit einem Arretierungsmittel (5c), welches in eine Öffnung (5d) in dem Rotors (8) radial eingreifen kann.

10. Magnus-Rotor (2) nach einem der vorherigen Ansprüche,
wobei der Träger (4) aufweist:
einen Antrieb (15) zum Antreiben des Rotor (8),
einen Wechselrichter (17) zum Speisen des Antriebs (15) mit elektrischer Energie, und
einer Steuerung (16) zum Steuern des Antriebs (15) und/oder des Wechselrichters (17).

11. Magnus-Rotor (2) nach einem der vorherigen Ansprüche,
wobei an jedem der wenigstens einen Befestigungspunkte (4a, 4b) ein Befestigungsmittel (11a, 11b) vorgesehen ist, welches durch jede der wenigstens einen vertikal zueinander ausgerichteten Öffnung (10a, 10b) der Platte (10) und Öffnung (8a, 8b) des Rotors (8) von jedem der wenigstens einen Befestigungspunkte (4a, 4b) des Trägers (4) durch die Platte (10) geführt wird,
wobei der Magnus-Rotor (2) mittels des Befestigungsmittels (4a, 4b) und einer Hebevorrichtung (12a, 12b, 12c) angehoben werden kann.

12. Schiff, insbesondere Frachtschiff, mit einem Magnus-Rotor (2) nach einem der vorherigen Ansprüche.

13. Verfahren zum Anheben eines Magnus-Rotors (2), mit den Schritten:
in einem stillstehenden Zustand des Magnus-Rotors (2), Ausrichten von einer Öffnung (10a, 10b) oder mehreren Öffnungen (10a, 10b) einer horizontalen Platte (10) des Rotors (8) des Magnus-Rotors (2) und einer Öffnung (8a, 8b) oder mehrerer Öffnungen (8a, 8b) des Rotors (8) des Magnus-Rotors (2) und einem Befestigungspunkt (4a, 4b) oder mehrerer Befestigungspunkte (4a, 4b) des Trägers (4) des Magnus-Rotors (2) vertikal zueinander,
Öffnen der Öffnung (10a, 10b) oder der Öffnungen (10a, 10b) der horizontalen Platte (10) und der Öffnung (8a, 8b) oder der Öffnungen (8a, 8b) des Rotors (8),
Befestigen von Befestigungsmitteln (11 a, 11 b) an dem Befestigungspunkt (4a, 4b) oder den Befestigungspunkten (4a, 4b) des Trägers (4) und an einer Hebevorrichtung (12a, 12b, 12c),
Befestigen der Befestigungsmittel (11a, 11b) an einer Hebevorrichtung (12a, 12b, 12c) oberhalb und außerhalb des Magnus-Rotors (2) durch Hindurchführen der Befestigungsmittel (11a, 11b) durch die geöffnete Öffnung (8a, 8b) oder die geöffneten Öffnungen (8a, 8b) des Rotors (8) und durch die geöffnete Öffnung (10a, 10b) oder die geöffneten Öffnungen (10a, 10b) der horizontalen Platte (10),
Lösen von Haltemitteln (9) des Trägers (4) und eines Untergrundes (20) des Magnus-Rotors (2), und
Anheben des Magnus-Rotors (2) von dem Untergrund (20) mittels der Befestigungsmittel (11a, 11b) und der Hebevorrichtung (12a, 12b, 12c).

## Claims

1. Magnus rotor (2) having
a carrier (4) which is arranged inside the Magnus rotor (2), a rotor (8) which rotates about the carrier (4) during operation of the Magnus rotor (2),
a plate (10) which horizontally terminates the rotor (8), and a bearing (6) which carries the rotor (8) on the carrier (4), **characterised in that** the rotor (8) has at least one opening (10a, 10b) in the plate (10) and **in that**
the carrier (4) has at least one securing location (4a, 4b) for lifting the Magnus rotor (2) by means of at least one securing means (11a, 11b) and a lifting device (12a, 12b, 12c).

2. Magnus rotor (2) according to claim 1,
wherein the rotor (8) has at least two openings (10a, 10b) in the plate (10), and
wherein the carrier (4) has at least two securing locations (4a, 4b).

3. Magnus rotor (2) according to claim 1 or claim 2, wherein the rotor (8) in the region with which it is connected to the bearing (6) has at least one opening (8a, 8b) or at least two openings (8a, 8b).

4. Magnus rotor (2) according to any one of the preceding claims, wherein one opening (10a, 10b) or the two openings (10a, 10b) of the plate (10) and one securing location (4a, 4b) or the two securing locations (4a, 4b) of the carrier (4) can be arranged substantially vertically relative to each other.

5. Magnus rotor (2) according to any one of the preceding claims,
wherein one opening (10a, 10b) of the plate (10), one opening (8a, 8b) of the rotor (8) and one securing location (4a, 4b) of the carrier (4) or each of the two openings (10a, 10b) of the plate (10), each of the two openings (8a, 8b) of the rotor (8) and each of the two securing locations (4a, 4b) of the carrier (4) are arranged substantially with the same spacing from the vertical rotation axis of the Magnus rotor (2).

6. Magnus rotor (2) according to any one of the preceding claims,
wherein the two openings (10a, 10b) of the plate (10), the two openings (8a, 8b) of the rotor (8) and the two securing locations (4a, 4b) of the carrier (4) are each arranged with a horizontal spacing of substantially 180º with respect to each other about the vertical rotation axis of the Magnus rotor (2).

7. Magnus rotor (2) according to any one of the preceding claims,
wherein the carrier (4) has a securing device (5a, 5b) in order to prevent a relative movement between the carrier (4) and the rotor (8).

8. Magnus rotor (2) according to claim 7,
wherein the securing device (5a, 5b) is a brake device (5a) which can act on a drive (15) of the rotor (8).

9. Magnus rotor (2) according to claim 7,
wherein the securing device (5a, 5b) is a locking device (5b) having a securing means (5c) which can radially engage in an opening (5d) in the rotor (8).

10. Magnus rotor (2) according to any one of the preceding claims,
wherein the carrier (4) has:
a drive (15) for driving the rotor (8),
an inverter (17) for supplying the drive (15) with electrical energy, and
a control (16) for controlling the drive (15) and/or the inverter (17).

11. Magnus rotor (2) according to any one of the preceding claims,
wherein at each of the at least one securing location(s) (4a, 4b) there is provided a securing means (11a, 11b) which is guided through each of the at least one opening(s) (10a, 10b) of the plate (10), which opening(s) is/are orientated vertically with respect to each other, and opening (8a, 8b) of the rotor (8) from each of the at least one securing location(s) (4a, 4b) of the carrier (4) through the plate (10),
wherein the Magnus rotor (2) can be raised by means of the securing means (4a, 4b) and a lifting device (12a, 12b, 12c).

12. Ship, in particular a freight ship, having a Magnus rotor (2) according to any one of the preceding claims.

13. Method for lifting a Magnus rotor (2), having the steps of:
in a stationary state of the Magnus rotor (2), orientation of one opening (10a, 10b) or a plurality of openings (10a, 10b) of a horizontal plate (10) of the rotor (8) of the Magnus rotor (2) and an opening (8a, 8b) or a plurality of openings (8a, 8b) of the rotor (8) of the Magnus rotor (2) and a securing location (4a, 4b) or a plurality of securing locations (4a, 4b) of the carrier (4) of the Magnus rotor (2) vertically with respect to each other,
opening the opening (10a, 10b) or the openings (10a, 10b) of the horizontal plate (10) and the opening (8a, 8b) or the openings (8a, 8b) of the rotor (8),
securing securing means (11a, 11b) to the securing location (4a, 4b) or the securing locations (4a, 4b) of the carrier (4) and to a lifting device (12a, 12b, 12c),
securing the securing means (11a, 11b) to a lifting device (12a, 12b, 12c) above and outside the Magnus rotor (2) by guiding the securing means (11a, 11b) through the opened opening (8a, 8b) or the opened openings (8a, 8b) of the rotor (8) and through the opened opening (10a, 10b) or the opened openings (10a, 10b) of the horizontal plate (10), releasing retention means (9) of the carrier (4) and a substrate (20) of the Magnus rotor (2), and
lifting the Magnus rotor (2) from the substrate (20) using the securing means (11a, 11b) and the lifting device (12a, 12b, 12c).

## Revendications

1. Rotor à effet Magnus (2) avec
un support (4) qui est disposé à l'intérieur du rotor à effet Magnus (2),
un rotor (8) qui tourne lors du fonctionnement du rotor à effet Magnus (2) autour du support (4),
une plaque (10) qui termine horizontalement le rotor (8) et
un palier (6) qui porte le rotor (8) sur le support (4), **caractérisé en ce que** le rotor (8) présente au moins une ouverture (10a, 10b) dans la plaque (10) et **en ce que**
le support (4) présente au moins un point de fixation (4a, 4b) pour le levage du rotor à effet Magnus (2) à l'aide d'au moins un moyen de fixation (11a, 11b) et d'un dispositif de levage (12a, 12b, 12c).

2. Rotor à effet Magnus (2) selon la revendication 1,
le rotor (8) présentant au moins deux ouvertures (10a, 10b) dans la plaque (10), et
le support (4) présentant au moins deux points de fixation (4a, 4b).

3. Rotor à effet Magnus (2) selon la revendication 1 ou 2,
le rotor (8) présentant, dans la zone avec laquelle il est relié au palier (6), au moins une ouverture (8a, 8b) ou au moins deux ouvertures (8a, 8b).

4. Rotor à effet Magnus (2) selon l'une quelconque des revendications précédentes,
l'une ouverture (10a, 10b) ou les deux ouvertures (10a, 10b) de la plaque (10) et l'un point de fixation (4a, 4b) ou les deux points de fixation (4a, 4b) du support (4) pouvant être disposés verticalement l'un par rapport à l'autre.

5. Rotor à effet Magnus (2) selon l'une quelconque des revendications précédentes,
l'une ouverture (10a, 10b) de la plaque (10), l'une ouverture (8a, 8b) du rotor (8) et l'un point de fixation (4a, 4b) du support (4) ou chacune des deux ouvertures (10a, 10b) de la plaque (10), chacune des deux ouvertures (8a, 8b) du rotor (8) et chacun des deux points de fixation (4a, 4b) du support (4) étant disposés sensiblement à la même distance de l'axe de rotation vertical du rotor à effet Magnus (2).

6. Rotor à effet Magnus (2) selon l'une quelconque des revendications précédentes,
les deux ouvertures (10a, 10b) de la plaque (10), les deux ouvertures (8a, 8b) du rotor (8) et les deux points de fixation (4a, 4b) du support (4) étant disposés respectivement à une distance horizontale de sensiblement 180° l'un par rapport à l'autre autour de l'axe de rotation vertical du rotor à effet Magnus (2).

7. Rotor à effet Magnus (2) selon l'une quelconque des revendications précédentes,
le support (4) présentant un dispositif d'arrêt (5a, 5b) afin d'empêcher un mouvement relatif entre le support (4) et le rotor (8).

8. Rotor à effet Magnus (2) selon la revendication 7,
le dispositif d'arrêt (5a, 5b) étant un dispositif de freinage (5a) qui peut agir sur un entraînement (15) du rotor (8).

9. Rotor à effet Magnus (2) selon la revendication 7,
le dispositif d'arrêt (5a, 5b) étant un dispositif de protection (5b) avec un moyen d'arrêt (5c) qui peut s'engager radialement dans une ouverture (5d) dans le rotor (8).

10. Rotor à effet Magnus (2) selon l'une quelconque des revendications précédentes,
le support (4) présentant :
un entraînement (15) pour l'entraînement du rotor (8),
un onduleur (17) pour l'alimentation de l'entraînement (15) en énergie électrique et
une commande (16) pour la commande de l'entraînement (15) et/ou de l'onduleur (17).

11. Rotor à effet Magnus (2) selon l'une quelconque des revendications précédentes,
un moyen de fixation (11a, 11b) étant prévu sur chacun de l'au moins un point de fixation (4a, 4b), lequel moyen est guidé par chacune de l'au moins une ouverture (10a, 10b) orientée verticalement l'une par rapport à l'autre de la plaque (10) et ouverture (8a, 8b) du rotor (8) de chacun de l'au moins un point de fixation (4a, 4b) du support (4) par la plaque (10),
le rotor à effet Magnus (2) pouvant être relevé à l'aide du moyen de fixation (4a, 4b) et d'un dispositif de levage (12a, 12b, 12c).

12. Navire, en particulier cargo avec un rotor à effet Magnus (2) selon l'une quelconque des revendications précédentes.

13. Procédé de levage d'un rotor à effet Magnus (2) avec les étapes suivantes :
dans un état arrêté du rotor à effet Magnus (2), l'orientation d'une ouverture (10a, 10b) ou de plusieurs ouvertures (10a, 10b) d'une plaque horizontale (10) du rotor (8) du rotor à effet Magnus (2), et d'une ouverture (8a, 8b) ou de plusieurs ouvertures (8a, 8b) du rotor (8) du rotor à effet Magnus (2) et d'un point de fixation (4a, 4b) ou de plusieurs points de fixation (4a, 4b) du support (4) du rotor à effet Magnus (2) verticalement les uns par rapport aux autres,
l'ouverture de l'ouverture (10a, 10b) ou des ouvertures (10a, 10b) de la plaque (10) horizontale et de l'ouverture (8a, 8b) ou des ouvertures (8a, 8b) du rotor (8) ;
la fixation des moyens de fixation (11a, 11b) sur le point de fixation (4a, 4b) ou les points de fixation (4a, 4b) du support (4) et sur un dispositif de levage (12a, 12b, 12c),
la fixation des moyens de fixation (11a, 11b) sur un dispositif de levage (12a, 12b, 12c) au-dessus ou en dehors du rotor à effet Magnus (2) par passage des moyens de fixation (11a, 11b) par l'ouverture (8a, 8b) ouverte ou les ouvertures (8a, 8b) ouvertes du rotor (8) et par l'ouverture (10a, 10b) ouverte ou les ouvertures (10a, 10b) ouvertes de la plaque (10) horizontale,
le détachement des moyens de retenue (9) du support (4) et d'un fond (20) du rotor à effet Magnus (2) et
le levage du rotor à effet Magnus (2) du fond (20) à l'aide des moyens de fixation (11a, 11b) et du dispositif de levage (12a, 12b, 12c).
